**Europäisches Patentamt**

**European Patent Office**

**Office européen des brevets**

(19)

(11) Veröffentlichungsnummer: **0 193 752**
**B1**

(12) # EUROPÄISCHE PATENTSCHRIFT

(45) Veröffentlichungstag der Patentschrift:
**07.12.88**

(21) Anmeldenummer: **86101687.1**

(22) Anmeldetag: **10.02.86**

(51) Int. Cl.⁴: **F 04 B 21/02**, F 04 B 13/00,
F 04 B 7/02, B 29 C 31/04,
F 16 K 11/20

(54) **Dosierpumpe.**

(30) Priorität: **14.02.85 DE 3505108**

(43) Veröffentlichungstag der Anmeldung:
**10.09.86 Patentblatt 86/37**

(45) Bekanntmachung des Hinweises auf die Patenterteilung:
**07.12.88 Patentblatt 88/49**

(84) Benannte Vertragsstaaten:
**AT CH DE FR GB IT LI NL**

(56) Entgegenhaltungen:
**FR-A- 545 071**
**FR-A- 1 009 802**
**FR-A- 2 310 479**
**GB-A- 932 031**
**US-A- 4 211 345**

(73) Patentinhaber: **Siemens Aktiengesellschaft Berlin und München, Wittelsbacherplatz 2, D-8000 München 2 (DE)**

(72) Erfinder: **Habrich, Reiner Dipl.-Ing., Reiherweg 14, D-8011 Kirchheim (DE)**
Erfinder: **Bauer, Manfred, Fischbachauer Strasse 13, D-8000 München 90 (DE)**
Erfinder: **Reiter, Alois, Alfred-Schmidt-Strasse 2, D-8000 München 70 (DE)**

**Beschreibung**

Die Erfindung betrifft eine Dosierpumpe, insbesondere zum Dosieren flüssiger Bestandteile von Reaktionsharzmassen, nach dem Oberbegriff des Patentanspruchs 1.

Reaktionsharzmassen werden durch Mischen von genau vorgegebenen Mengen Harz und Härter hergestellt, wobei in vielen Fällen auch mehrere Harze und mehrere Härter verwendet werden. Ausserdem können auf die Harz- und die Härterkomponenten auch Zusatzstoffe wie Füllstoffe, Farbstoffe, Haftvermittler, Beschleuniger und dgl. verteilt werden. Moderne Aufbereitungsanlagen für derartige Reaktionsharzmassen bestehen aus mindestens zwei Vorratsbehältern für die flüssigen Bestandteile bzw. Vorgemische, den Vorratsbehältern nachgeordneten Dosiereinrichtungen und einer Mischeinheit, wobei als Mischeinheit statische oder dynamische Durchlaufmischer oder auch grössre Mischbehälter verwendet werden. Als Dosiereinrichtungen werden für füllstoffhaltige Komponenten insbesondere oszillierende Verdrängerpumpen – wie z. B. Kolbenpumpen, Membranpumpen oder Balgpumpen – eingesetzt, wogegen für ungefüllte Komponenten auch rotierende Verdrängerpumpen – wie z. B. Zahnradpumpen – eingesetzt werden können. Bei den insbesondere für das Dosieren füllstoffhaltiger Komponenten verwendeten Dosierpumpen mit hin- und herbewegbarem Verdränger sind sowohl ein Einlassventil als auch ein Auslassventil pro Verdränger erforderlich. Dabei werden üblicherweise selbsttätige Ventile – wie z. B. federbelastete Kugel-, Teller- oder Kegelventile – eingesetzt, die jedoch nur aufgrund der durch die Bewegung des Verdrängers erzeugten Druckunterschiede im Fördermedium betätigt werden (DE-OS-2 851 188). Dies bedeutet, dass z. B. aus einem unter Unterdruck stehenden Vorratsbehälter nur durch Erhöhung des hydrostatischen Druckes oder durch Druckerhöhung im Fördermedium mittels einer Vorpumpe zuverlässig gefördert werden kann. Vielfach ist es aber notwendig, die Komponente aus einem Vakuum zu dosieren. So müssen beispielsweise bei dem Verguss von elektrischen Hochspannungsbauteilen die Komponenten einer Epoxidgiessharzmasse aus einem Vakuum von beispielsweise 0,5 bis 100 mbar dosiert werden. Ausserdem besteht bei Dosierpumpen mit selbsttätigen federbelasteten Ventilen die Gefahr, dass körnige oder faserige Verunreinigungen zwischen Ventilsitz und beweglichem Ventilteil festgehalten werden. Dies führt dann aber zu einer vorübergehenden oder dauerhaften Funktionsstörung der Dosierpumpe, da das entsprechende Ventil durch die festgeklemmte Verunreinigung offengehalten wird und nur teilweise oder gar nicht gefördert wird.

Es sind auch bereits als Kolbenpumpen ausgebildete Dosierpumpen bekannt, bei welchen ein als Drehschieber ausgebildetes gemeinsames Ein- und Auslassventil im Pumpenkopf angeordnet ist. Je nach Stellung dieses von aussen zwangsläufig steuerbaren Drehschiebers wird dann der Arbeitsraum im Pumpenkopf entweder mit einem Vorratsbehälter oder mit einem Ausflussrohr verbunden (Lueger Lexikon der Technik, Band 8, 1967, Deutsche Verlags-Anstalt Stuttgart, Seiten 2 und 3). Durch einen derartigen Drehschieber wird eine sehr genaue Dosierung ermöglicht, da während der Öffnungs- und Schliessvorgänge keine Änderungen des Volumens im hydraulischen System erfolgen. Andererseits unterliegt der Drehschieber insbesondere dann einem sehr hohen Verschleiss, wenn flüssige Bestandteile von Reaktionsharzmassen dosiert werden sollen, die abrasive Füllstoffe enthalten. Als Folge dieses Verschleisses treten dann Undichtigkeiten auf, durch welche ein Dosieren von Komponenten aus einem Vakuum von vornehrein ausgeschlossen werden muss.

Aus der FR-A-2 310 479 ist eine gattungsgemässe Dosierpumpe bekannt, bei welcher das Einlassventil und das Auslassventil auf einem gemeinsamen Ventilschaft angeordnet sind und über einen an diesen Ventilschaft angelenkten Servoantrieb geregelt werden können. Der gemeinsame Ventilschaft erstreckt sich hierbei zwischen Einlassventil und Auslassventil durch den gesamten Pumpenkopf.

Aus der GB-A-932 031 ist eine Pumpe bekannt, bei welcher das Einlassventil und das Auslassventil auf gegenüberliegenden Seiten des Pumpenkopfes angeordnet sind, während ihre fluchtend ausgerichteten Ventilschäfte mit hydraulischen Betätigungszylindern gekoppelt sind. Die hydraulischen Betätigungszylinder sind dabei hydraulisch derart miteinander gekoppelt, dass beim Schliessen des Einlassventils das Auslassventil zwangsläufig geöffnet wird und ebenso bei Schliessen des Auslassventils das Einlassventil zwangsläufig geöffnet wird.

Der Erfindung liegt die Aufgabe zugrunde, eine für das Dosieren flüssiger Bestandteile von Reaktionsharzmassen geeignete Dosierpumpe mit zwangsläufig von aussen steuerbaren Ventilen zu schaffen, bei welcher die Ventile keinem nennenswerten Verschleiss unterliegen und ein Dosieren der flüssigen Bestandteile aus einem Vakuum in ein Vakuum ermöglicht wird.

Diese Aufgabe wird bei einer gattungsgemässen Dosierpumpe durch die kennzeichnenden Merkmale des Anspruchs 1 gelöst.

Der Erfindung liegt die Erkenntnis zugrunde, dass von aussen zwangsläufig steuerbare Tellerventile mit koaxial im Pumpenkopf und teleskopisch ineinander gelagerten Ventilschäften zumindest weitgehend verschleissfrei arbeiten können und ausserdem eine zuverlässige Abdichtung nach aussen ermöglichen. Eine zwischen Tellerventil und Ventilsitz festgeklemmte Verunreinigung führt allenfalls zu einer äusserst kurzfristigen Störung, da sie durch die zwangsläufige Steuerung des Tellerventils entweder beim Schliesshub abgequetscht oder nach dem nächsten Öffnungshub vom Fördermedium mitgerissen wird. Neben der guten Abdichtung nach aussen ermöglicht die koaxiale und teleskopische Anordnung der Tellerventile auch noch eine äusserst kompakte Ventilpaarung ohne nennenswerte Änderungen des Volumens im hydraulischen System bei den Öffnungs- und Schliessvorgängen. Ein weiterer Vorteil der von aussen zwangsläufig steuerbaren Tellerventile besteht darin, dass der Öffnungshub so bemessen werden kann, dass der Spaltquerschnitt etwa dem übrigen Rohrquerschnitt entspricht und kein zusätzlicher Druckverlust in dem strömenden Medium durch den Ventilspalt entsteht. Aufgrund der zwangsläufigen Steuerung der Tellerventile können dann auch die Schliesskräfte individuell auf die jeweiligen Erfordernisse eingestellt werden. Weiterhin ist es auch möglich, die Einlassventile oder die Auslassventile von zwei oder mehreren Dosierpumpen über gemeinsame Steuerleitungen synchron anzusteuern, ohne dass sich durch unterschiedliche Viskosität der zu dosierenden Medien eine wesentliche Beeinflussung der Öffnungs- und Schliesszeiten ergibt. So lassen sich Dosieraggregate mit zwei oder mehreren Dosierpumpen problemlos realisieren. Schliesslich kann auch noch durch Offenhalten des Einlassventils und durch Bewegen des Verdrängers das entsprechende Medium zwischen einem Vorratsbehälter und dem Verdränger hin- und herbewegt werden, wodurch ein Entmischen oder Sedimentieren von Mischungsbestandteilen sicher verhindert werden kann.

Gemäss einer bevorzugten Ausgestaltung der Erfindung ist der Ventilschaft des Einlassventils in dem Ventilteller und dem Ventilschaft des Auslassventils teleskopisch gelagert. Eine derartige auf die Strömungsverhältnisse im Arbeitsraum abgestimmte Anordnung der Ventilpaarung ermöglicht eine äusserst sichere Lagerung und Ventilführung von Einlassventil und Auslassventil im Ventilkopf. Ausserdem kann dann die Ventilführung des Einlassventils dadurch noch weiter verbessert werden, dass an den Ventilteller des Auslassventils ein zusätzliches Führungsglied für den Ventilschaft des Einlassventils angebracht wird.

Vorzugsweise ist der Ventilschaft des Auslassventils in einem an den Pumpenkopf angeflanschten Deckel gelagert. Hierdurch werden Wartungsarbeiten an der Dosierpumpe erheblich erleichtert, da die aus Einlassventil und Auslassventil bestehende Ventilanordnung ohne Auftrennen der das zu dosierende Medium führenden Rohrleitung durch einfaches Lösen des Deckels demontiert werden kann.

Gemäss einer besonders bevorzugten weiteren Ausgestaltung der Erfindung ist vorgesehen, dass die Aussendurchmesser der Ventilschäfte von Einlassventil und Auslassventil zumindest in den von dem zu dosierenden Medium umspülten Bereichen gleich gross sind. Durch diese Massnahme können Volumenänderungen bei einer Bewegung des Auslassventils vollständig vermieden werden, d.h. zwei oder mehrere Dosierströme bleiben dann im Volumenverhältnis stets unverändert.

Für ein schnelles Ausfördern von Luftblasen aus dem Arbeitsraum hat es sich als zweckmässig herausgestellt, wenn die aus Einlassventil und Auslassventil bestehende Ventilanordnung senkrecht hängend bis waagrecht liegend in den Pumpenkopf eingebaut wird. Besonders günstig ist es jedoch, wenn die aus Einlassventil und Auslassventil bestehende Ventilanordnung unter einem Neigungswinkel von etwa 45° in den Pumpenkopf eingebaut wird. In diesem Fall kann dann eine Sedimentation in der das zu dosierende Medium führenden Zuleitung beispielsweise durch die Anordnung eines Rührers oder dgl. besonders leicht vermieden werden.

Zum schnellen, restlosen Ausfördern von Luftblasen aus dem Arbeitsraum und somit auch zum einfachen Anfahren der Dosierpumpe ist es ferner besonders günstig, wenn das Einlassventil im unteren Bereich und das Auslassventil im oberen Bereich des Arbeitsraumes im Pumpenkopf angeordnet sind. Bei einer derartigen Anordnung der Ventile stimmt dann die Richtung aufsteigender Luftblasen mit der Förderrichtung des zu dosierenden Mediums überein.

Im Hinblick auf die nach aussen vakuumdichte Ausgestaltung der Dosierpumpe ist es auch zweckmässig, wenn in das Auslassventil ein den Ventilschaft des Einlassventils umschliessender Dichtring eingesetzt ist. In entsprechender Weise kann dann auch in den Deckel ein den Ventilschaft des Auslassventils umschliessender Dichtring eingesetzt werden. Eine weitere Verbesserung der Voraussetzungen für das Fördern bzw. Dosieren von Medien aus unter Vakuum oder unter Druck stehenden Vorratsbehältern kann dann schliesslich dadurch erreicht werden, dass in die Lagerspalte zwischen Deckel und Ventilschaft des Auslassventils und zwischen Ventilschaft des Auslassventils und Ventilschaft des Einlassventils ein flüssiges Dichtmedium einleitbar ist.

Sind das Einlassventil und das Auslassventil von aussen über hintereinander angeordnete doppeltwirkende Arbeitszylinder pneumatisch oder hydraulisch betätigbar, so ergibt sich eine besonders kompakte und raumsparende Ausgestaltung des gesamten Dosierpumpenaggregates.

Ein Ausführungsbeispiel der Erfindung ist in der Zeichnung dargestellt und wird im folgenden näher beschrieben. Es zeigen:

Fig. 1 einen Schnitt durch den Pumpenkopf einer Dosierpumpe zum Dosieren flüssiger Bestandteile von Reaktionsharzmassen und

Fig. 2 eine Tandem-Anordnung zweier Arbeitszylinder für die Betätigung der in dem Pumpenkopf nach Fig. 1 angeordneten Ventile.

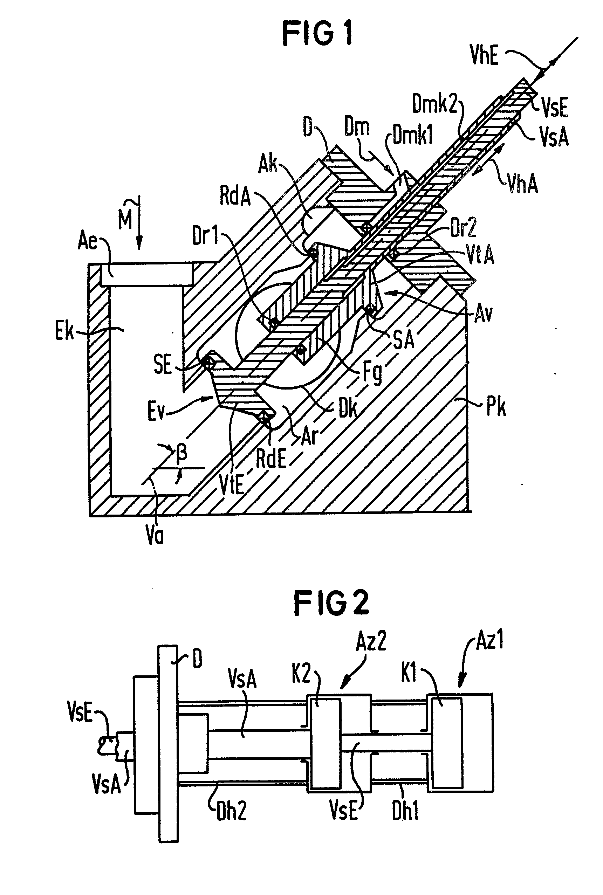

Fig. 1 zeigt einen Schnitt durch den beispielsweise aus einem nicht-rostenden Stahl bestehenden Pumpenkopf Pk einer als Kolbenpumpe ausgebildeten Dosierpumpe. In den blockförmig ausgebildeten Pumpenkopf Pk ist von oben her in vertikaler Richtung ein Einlasskanal Ek eingebracht, an dessen oberes Anschlussende Ae eine in der Zeichnung nicht dargestellte vertikale Zufuhrleitung für das durch einen Pfeil M angedeutete zu dosierende Medium angeschlossen wird. Vom Bodenbereich des Einlasskanals Ek ausgehend zweigt ein unter einem Neigungswinkel zur Horizontalen von $\beta = 45°$ schräg nach oben führender zweiter Kanal ab, welcher den mit Ar bezeichneten Arbeitsraum der Dosierpumpe bildet und an seinem oberen Ende durch einen von aussen angeflanschten Deckel D verschlossen ist. Ausserdem ist dieser zweite Kanal in seinem Durchmesser so abgestuft, dass von unten ausgesehen zunächst ein Sitz SE für ein insgesamt mit Ev bezeichnetes Einlassventil und im Abstand danach ein Sitz SA für ein insgesamt mit Av bezeichnetes Auslassventil gebildet wird.

Im Bereich zwischen den Sitzen SE und SA ist der waagrecht ausgebildete und in Fig. 1 nicht näher dargestellte Dosierzylinder der Dosierpumpe an die Rückseite des Pumpenkopfes Pk angeflanscht, wobei der durch den Hub des Dosierkolbens Dk definierte Messraum des Dosierzylinders in den Arbeitsraum Ar einmündet. Ferner ist in dem Schnittbild der Fig. 1 im Bereich zwischen dem Sitz SA und dem Deckel D noch der Anfangsbereich eines Auslasskanals Ak zu erkennen, an dessen rückwärtiges Ende eine in der Zeichnung nicht dargestellte horizontale Abfuhrleitung für das zu dosierende Medium M angeschlossen wird.

Das Einlassventil Ev ist als ein von aussen zwangsläufig steuerbares Tellerventil ausgebildet, dessen Ventilteller mit VtE und dessen Ventilschaft mit VsE bezeichnet sind. Auf der dem geschliffenen Sitz SE zugewandten Seite trägt der Ventilteller VtE eine in eine nicht näher bezeichnete Nut eingelassene Ringdichtung RdE. Um auch kleinste Änderungen im Volumen des hydraulischen Systems der Dosierpumpe zu vermeiden, besteht die Ringdichtung RdE nicht aus einem Elastomer, sondern aus einem harten Werkstoff – wie z. B. Polytetrafluoräthylen mit Kohle als Füllstoff.

Das Auslassventil Av ist ebenfalls als ein von aussen zwangsläufig steuerbares Tellerventil ausgebildet, dessen Ventilteller mit VtA und dessen Ventilschaft mit VsA bezeichnet sind. Auf der dem geschliffenen Sitz SA zugewandten Seite trägt der Ventilteller VtA eine in eine nicht näher bezeichnete Nut eingelassene Ringdichtung RdA, die im Hinblick auf unerwünschte Volumenänderungen im hydraulischen System wiederum aus einem harten Werkstoff – wie z. B. Polytetrafluoräthylen mit Kohle als Füllstoff – besteht. An die Unterseite des Ventiltellers VtA ist ferner noch ein hohlzylindrisches Führungsglied Fg angeformt, dessen Aufgabe nachfolgend im Zusammenhang mit der Ventilführung näher erläutert wird.

Die Ventilführung des beispielsweise aus einem nicht-rostenden Stahl bestehenden Einlassventils Ev erfolgt dadurch, dass sein Ventilschaft VsE das gesamte Auslassventil Av koaxial durchsetzt, d. h. das Einlassventil Ev und das Auslassventil Av besitzen eine gemeinsame Ventilachse Va, die unter dem bereits erwähnten Neigungswinkel von $\beta$ = 45° zur Horizontalen ausgerichtet ist. Dabei ist der Ventilschaft VsE zunächst in dem Führungsglied Fg und dann mit einem im Durchmesser verringerten, nach aussen führenden Bereich in dem hohlgebohrten Ventilschaft VsA des Auslassventils Av geführt. Durch diese im Durchmesser verschiedene Ausgestaltung des Ventilschaftes VsE können dann die von dem zu dosierenden Medium M umspülten Bereiche der Ventilschäfte VsE

und VsA im Aussendurchmesser gleich gross ausgebildet werden, so dass Volumenänderungen im hydraulischen System bei einer Bewegung des Auslassventils Av vollständig vermieden werden. Die Ventilführung des Auslassventils Av, welches ebenfalls aus einem nicht-rostenden Stahl bestehen kann, erfolgt über den Ventilschaft VsA in einer nicht näher bezeichneten Führungsbohrung des Deckels D.

Durch die vorstehend beschriebenen Ventilführungen können das Einlassventil Ev und das Auslassventil Av von aussen über die zugehörigen Ventilschäfte VsE bzw. VsA zwangsläufig gesteuert werden, wobei die entsprechenden Ventilhübe durch Doppelpfeile VhE bzw. VhA angedeutet sind.

Damit die Dosierpumpe flüssige Bestandteile von Reaktionsharzmassen, wie z. B. eine Harzkomponente oder eine Härterkomponente, aus einem Vakuum in ein Vakuum fördern kann, muss der Arbeitsraum Ar nach aussen sehr gut abgedichtet werden. Hierzu ist in das Führungsglied Fg ein den Ventilschaft VsE umschliessender Dichtring Drl eingesetzt, während in den Deckel D ein den Ventilschaft VsA umschliessender Dichtring Dr2 eingesetzt ist. Als Dichtringe Dr1 und Dr2 werden beispielsweise im Druck einstellbare Winkelringpackungen verwendet. Zum Abdichten des Ventilschaftes VsE könnte anstelle des Dichtringes Dr1 aber auch ein Federbalg aus Polytetrafluoräthylen oder Metall verwendet werden. Eine zusätzliche Abdichtung der Ventilschäfte VsE und VsA gegen die Atmosphäre beim Vakuum-Betrieb wird durch ein flüssiges Dichtmedium ermöglicht. Dieses durch einen Pfeil Dm angedeutete Dichtmedium wird durch einen ersten Dichtmittelkanal Dmk1 in den Lagerspalt zwischen dem Deckel D und dem Ventilschaft VsA eingeleitet. Ein zweiter als Längsnut in den Ventilschaft VsE eingebrachter Dichtmittelkanal Dmk2 wird entweder bei der Montage mit Dichtmittel Dm gefüllt oder aber über den ersten Dichtmittelkanal Dmk1 und eine Radialbohrung im Ventilschaft VsA mit dem Dichtmittel Dm beaufschlagt. Als Dichtmittel Dm, das gleichzeitig auch als Schmiermittel wirken soll, wird beispielsweise reines Harz verwendet, wenn es sich bei dem zu dosierenden Medium M um eine Harzkomponente handelt. Für das Dosieren flüssiger Bestandteile von Epoxidharzmassen ist auch Rizinusöl als Dichtmittel Dm geeignet, da bei eventuell auftretenden geringfügigen Leckagen das Rizinusöl problemlos in das Epoxidharz eingebaut wird.

Gemäss Fig. 2 erfolgt die Betätigung der Ventile pneumatisch oder hydraulisch über hintereinander angeordnete doppeltwirkende Arbeitszylinder Az1 und Az2, wobei der Kolben K1 des ersten Arbeitszylinders Az1 auf dem Ventilschaft VsE des Einlassventils Ev (vgl. Fig. 1) befestigt ist und wobei der Kolben K2 des zweiten Arbeitszylinders Az2 auf dem Ventilschaft VsA des Auslassventils Av (vgl. Fig. 1) befestigt ist. Aus der stark vereinfachten schematischen Darstellung ist ferner ersichtlich, dass der Arbeitszylinder Az1 über Distanzhalter Dh1 mit dem zweiten Arbeitszylinder Az2 verbunden ist und dass der zweite Arbeitszylinder Az2 seinerseits über Distanzhalter Dh2 am Deckel D befestigt ist.

**Patentansprüche**

1. Dosierpumpe, insbesondere zum Dosieren flüssiger Bestandteile von Reaktionsharzmassen,
   – mit einem hin- und herbewegbaren Verdränger,
   – einem als Tellerventil ausgebildeten und von aussen zwangsläufig steuerbaren Einlassventil (Ev)
   – einem als Tellerventil ausgebildeten und von aussen zwangsläufig steuerbaren Auslassventil (Av), wobei
   – Einlassventil (Ev) und Auslassventil (Av) koaxial gelagerte Ventilschäfte (VsE, VsA) aufweisen, dadurch gekennzeichnet, dass sich die Ventilschäfte (VsE, VsA) von Einlassventil (Ev) und Auslassventil (Av) in der gleichen Richtung in den Pumpenkopf (Pk) erstrecken und teleskopisch ineinander gelagert sind.

2. Dosierpumpe nach Anspruch 1, dadurch gekennzeichnet, dass der Ventilschaft (VsE) des Einlassventils (Ev) in dem Ventilteller (VtA) und dem Ventilschaft (VsA) des Auslassventils (Av) teleskopisch gelagert ist.

3. Dosierpumpe nach Anspruch 2, dadurch gekennzeichnet, dass an den Ventilteller (VtA) des Auslassventils (Av) ein zusätzliches Führungsglied (Fg) für den Ventilschaft (VsE) des Einlassventils (Ev) angebracht ist.

4. Dosierpumpe nach Anspruch 2 oder 3, dadurch gekennzeichnet, dass der Ventilschaft (VsA) des Auslassventils (Av) in einem an den Pumpenkopf (Pk) angeflanschten Deckel (D) gelagert ist.

5. Dosierpumpe nach einem der vorhergehenden Ansprüche, dadurch gekennzeichnet, dass die Aussendurchmesser der Ventilschäfte (VsE, VsA) von Einlassventil (Ev) und Auslassventil (Av) zumindest in den von dem zu dosierenden Medium (M) umspülten Bereichen gleich gross sind.

6. Dosierpumpe nach einem der vorhergehenden Ansprüche, dadurch gekennzeichnet, dass die aus Einlassventil (Ev) und Auslassventil (Av) bestehende Ventilanordnung senkrecht hängend bis waagrecht liegend in den Pumpenkopf (Pk) eingebaut ist.

7. Dosierpumpe nach Anspruch 6, dadurch gekennzeichnet, dass die aus Einlassventil (Ev) und Auslassventil (Av) bestehende Ventilanordnung unter einem Neigungswinkel (β) von etwa 45° in den Pumpenkopf (Pk) eingebaut ist.

8. Dosierpumpe nach einem der vorhergehenden Ansprüche, dadurch gekennzeichnet, dass das Einlassventil (Ev) im unteren Bereich und das Auslassventil (Av) im oberen Bereich des Arbeitsraumes (Ar) im Pumpenkopf (Pk) angeordnet sind.

9. Dosierpumpe nach einem der Ansprüche 2 bis 8, dadurch gekennzeichnet, dass in das Auslassventil (Av) ein den Ventilschaft (VsE) des Einlassventils (Ev) umschliessender Dichtring (Dr1) eingesetzt ist.

10. Dosierpumpe nach einem der Ansprüche 4 bis 9, dadurch gekennzeichnet, dass in dem Deckel (D) ein den Ventilschaft (VsA) des Auslassventils (Av) umschliessender Dichtring (Dr2) eingesetzt ist.

11. Dosierpumpe nach einem der Ansprüche 4 bis 10, dadurch gekennzeichnet, dass in die Lagerspalte zwischen Deckel (D) und Ventilschaft (VsA) des Auslassventils (Av) und zwischen Ventilschaft (VsA) des Auslassventils (Av) und Ventilschaft (VsE) des Einlassventils (Ev) ein flüssiges Dichtmedium (Dm) einleitbar ist.

12. Dosierpumpe nach einem der vorhergehenden Ansprüche, dadurch gekennzeichnet, dass das Einlassventil (Ev) und das Auslassventil (Av) von aussen über hintereinander angeordnete, doppeltwirkende Arbeitszylinder (Az1, Az2) pneumatisch oder hydraulisch betätigbar sind.

**Claims**

1. Dosing pump, especially for dosing liquid components of reactive resin compositions,
   – with a displacer which can be moved forwards and backwards,
   – an inlet valve (Ev) which is constructed as a disc valve and can be positively controlled from outside,
   – an outlet valve (Av) which is constructed as a disc valve and can be positively controlled from outside,
   – the inlet valve (Ev) and outlet valve (Av) having valve stems (VsE, VsA) which run coaxially, characterized in that the valve stems (VsE, VsA) of the inlet valve (Ev) and outlet valve (Av) extend in the same direction in the pump head (Pk) and run telescopically within one another.

2. Dosing pump according to claim 1, characterized in that the valve stem (VsE) of the inlet valve (Ev) runs telescopically in the valve disc (VtA) and valve stem (VsA) of the outlet valve (Av).

3. Dosing pump according to claim 2, characterized in that an additional guide element (Fg) for the valve stem (VsE) of the inlet valve (Ev) is attached to the valve disc (VtA) of the outlet valve (Av).

4. Dosing pump according to claim 2 or 3, characterized in that the valve stem (VsA) of the outlet valve (Av) runs in a cover (D) which is flange-mounted at the pump head (Pk).

5. Dosing pump according to one of the preceding claims, characterized in that the external diameters of the valve stems (VsE and VsA) of the inlet valve (Ev) and outlet valve (Av) are of the same size, at least in the parts around which the medium (M) to be dosed flows.

6. Dosing pump according to one of the preceding claims, characterized in that the valve configuration consisting of inlet valve (Ev) and outlet valve (Av) is installed in the pump head (Pk) from the vertically suspended to the horizontally lying position.

7. Dosing pump according to claim 6, characterized in that the valve configuration consisting of inlet valve (Ev) and outlet valve (Av) is installed in the pump head (Pk) at an angle of inclination (β) of approximately 45°.

8. Dosing pump according to one of the preceding claims, characterized in that the inlet valve (Ev) is positioned in the lower part of the operating space (Ar) in the pump head (Pk) and the outlet valve (Av) is positioned in the upper part.

9. Dosing pump according to one of claims 2 to 8, characterized in that a sealing ring (Dr1) surrounding the valve stem (VsE) of the inlet valve (Ev) is set into the outlet valve (Av).

10. Dosing pump according to one of claims 4 to 9, characterized in that a sealing ring (Dr2) surrounding the valve stem (VsA) of the outlet valve (Av) is set into the cover (D).

11. Dosing pump according to one of claims 4 to 10, characterized in that a liquid sealing medium (Dm) can be introduced into the bearing clearance between cover (D) and valve stem (VsA) of the outlet valve (Av) and between valve stem (VsA) of the outlet valve (Av) and valve stem (VsE) of the inlet valve (Ev).

12. Dosing pump according to one of the preceding claims, characterized in that the inlet valve (Ev) and the outlet valve (Av) can be pneumatically or hydraulically actuated from outside by double-acting working cylinders (Az1, Az2) arranged in tandem.

**Revendications**

1. Pompe doseuse, notamment pour le dosage des constituants liquides de masses de résine de réaction, comprenant
— un organe de refoulement pouvant aller et venir;
— une soupape d'admission (Ev), constituée en soupape à disque et pouvant être commandée positivement de l'extérieur;
— une soupape de refoulement (Av), constituée en soupape à disque et pouvant être commandée positivement de l'extérieur;
— la soupape d'admission (Ev) et la soupape de refoulement (Av) ayant des tiges de soupape (VsE, VsA) montées coaxialement;
caractérisée en ce que les tiges de soupape (VsE, VsA) de la soupape d'admission (Ev) et de la soupape de refoulement (Av) s'étendent dans la même direction dans la tête de pompe (Pk) et sont montées télescopiquement l'une dans l'autre.

2. Pompe doseuse suivant la revendication 1, caractérisée en ce que la tige de soupape (VsE) de la soupape d'admission (Ev) est montée télescopiquement dans le disque de soupape (VtA) et dans la tige de soupape (VsA) de la soupape de refoulement (Av).

3. Pompe doseuse suivant la revendication 2, caractérisée en ce que sur le disque de soupape (VtA) de la soupape de refoulement (Av) est monté un organe supplémentaire de guidage (Fg) de la tige de la soupape d'admission (Ev).

4. Pompe doseuse suivant la revendication 2 ou 3, caractérisée en ce que la tige de soupape (VsA) de la soupape de refoulement (Av) est montée dans un couvercle (D) bridé sur la tête de pompe (Pk).

5. Pompe doseuse suivant l'une des revendications précédentes, caractérisée en ce que les diamètres extérieurs des tiges de soupape (VsE, VsA) de la soupape d'admission (Ev) et de la soupape de refoulement (Av) sont égaux, au moins dans les parties autour desquelles passe le milieu (M) à doser.

6. Pompe doseuse suivant l'une des revendications précédentes, caractérisée en ce que l'agencement de soupapes constitué de la soupape d'admission (Ev) et la soupape de refoulement (Av), est monté en position de suspension verticale pouvant aller jusqu'à la position horizontale dans la tête de pompe.

7. Pompe doseuse suivant la revendication 6, caractérisée en ce que l'agencement de soupapes, constitué de la soupape d'admission (Ev) et de la soupape de refoulement (Av) est monté dans la tête de pompe (Pk) en faisant un angle d'inclinaison (β) de 45° environ.

8. Pompe doseuse suivant l'une des revendications précédentes, caractérisée en ce que la soupape d'admission (Ev) est disposée dans la partie inférieure et la soupape de refoulement (Av) dans la partie supérieure de la chambre de travail (Ar) de la tête de pompe (Pk).

9. Pompe doseuse suivant l'une des revendications 2 à 8, caractérisée en ce qu'une bague d'étanchéité (Dr1), entourant la tige de soupape (VsE) de la soupape d'admission (Ev), est montée dans la soupape de refoulement (Av).

10. Pompe doseuse suivant l'une des revendications 4 à 9, caractérisée en ce qu'une bague d'étanchéité (Dr2), entourant la tige de soupape (VsA) de la soupape de refoulement (Av), est montée dans le couvercle (D).

11. Pompe doseuse suivant l'une des revendications 4 à 10, caractérisée en ce qu'un milieu d'étanchéité fluide (Dm) peut être introduit dans la fente de palier entre le couvercle (D) et la tige de soupape (VsA) de la soupape de refoulement (Av) et entre la tige de soupape (VsA) de la soupape de refoulement (Av) et la tige de soupape (VsE) de la soupape d'admission (Ev).

12. Pompe doseuse suivant l'une des revendications précédentes, caractérisée en ce que la soupape d'admission (Ev) et la soupape de refoulement (Av) peuvent être manœuvrées pneumatiquement ou hydrauliquement de l'extérieur par des vérins (Az1, Az2) à double effet, montés l'un derrière l'autre.

EP 0193752 B1

# FIG 1

# FIG 2